# EUROPEAN PATENT APPLICATION

(11) **EP 4 733 151 A1**
(43) Date of publication of application: **29.04.2026**
(21) Application number: 25209916.3
(22) Date of filing: 20.10.2025
(51) Int. Cl.: B60R 19/48, G01S 7/02, G01S 13/931

(54) **VEHICLE STRUCTURE**

(30) Priority: 25.10.2024 JP 2024187985
(71) Applicant: Suzuki Motor Corporation, Shizuoka 432-8611 (JP)
(72) Inventor: KAWAHARA, Shunya, Hamamatsu-shi, 432-8611 (JP); ARIMITSU, Kaishi, Hamamatsu-shi, 432-8611 (JP)
(74) Representative: Haseltine Lake Kempner LLP

(57) **Abstract**

[Problem to be Solved] Displacement of a detection wave passage section of an exterior member is reduced.

[Solution] A vehicle structure 10 includes a first exterior member 1 constituting a design surface on a vehicle outer side at a front portion, rear portion, or side portion of a vehicle, and a second exterior member 2 disposed on the vehicle outer side of part of the first exterior member 1. The first exterior member 1 is formed with a sensor opening 11 through which detection waves to be detected by a sensor device pass, and the second exterior member 2 includes a detection wave passage section 21 that covers the sensor opening 11 from the vehicle outer side and through which the detection waves pass. A peripheral portion of the detection wave passage section 21 of the second exterior member 2 is attached to a peripheral portion of the sensor opening 11 of the first exterior member 1. The vehicle structure 10 further includes a reinforcement member 3 that reinforces the peripheral portion of the sensor opening 11 of the first exterior member 1.

## Description

### [Technical Field]

The present invention relates to vehicle structures of automobiles or the like, and more specifically, relates to vehicle structures of a front portion, rear portion, or side portion of a vehicle.

### [Background Art]

A sensor device configured to sense an environment outside a vehicle may be provided at a front portion or rear portion of a vehicle such as an automobile. Examples of the sensor device include a millimeter wave radar that uses electromagnetic waves in a millimeter wave band as detection waves, a sound wave sensor (ultrasonic wave sensor/sonar) that uses sound waves as detection waves, and a camera (image capturing device). The sensor device is disposed at the back surface of an exterior member, such as a bumper or a grille, that constitutes a design surface on the vehicle outer side, and the exterior member includes a detection wave passage section through which detection waves pass.

A structure disclosed in Patent Literature 1 is known as an example of a conventional vehicle structure having a structure for disposing a sensor device at the front portion or rear portion of a vehicle. The structure disclosed in Patent Literature 1 includes a lower grille disposed on a vehicle body outer side of a radar module, and a protection cover attached to an opening portion of the lower grille and covering the radar module. The protection cover allows millimeter waves or microwaves transmitted and received by the radar module to pass therethrough.

### [Citation List]

### [Patent Literature]

### [Patent Literature 1] JP 2021-025849 A

### [Summary of Invention]

### [Problem to be Solved by the Invention]

An exterior member such as the lower grille and the protection cover of Patent Literature 1 is often made of resin, and the rigidity of the exterior member is lower than that of a vehicle body structural member. Thus, in Patent Literature 1, when external force due to vibrations of a vehicle during driving, minor collisions, or the like is applied to the exterior member, the protection cover as the detection wave passage section is potentially displaced, resulting in change in the relative positional relationship (distance and angle) between the protection cover and the radar module. Such change in the relative positional relationship between the detection wave passage section and the sensor device potentially leads to decrease in the sensing accuracy of the sensor device.

Thus, it is an object of the present invention to provide a vehicle structure that can reduce displacement of a detection wave passage section of an exterior member.

### [Means for Solving the Problem]

An aspect of the present invention is a vehicle structure including: a first exterior member constituting a design surface on a vehicle outer side at a front portion, rear portion, or side portion of the vehicle and having a sensor opening through which detection waves to be detected by a sensor device disposed on a vehicle inner side of the first exterior member pass; and a second exterior member disposed on the vehicle outer side of part of the first exterior member, constituting a design surface on the vehicle outer side, and including a detection wave passage section that covers the sensor opening from the vehicle outer side and through which the detection waves pass. In the vehicle structure, a peripheral portion of the detection wave passage section of the second exterior member is attached to a peripheral portion of the sensor opening of the first exterior member. The vehicle structure further includes a reinforcement member that reinforces the peripheral portion of the sensor opening of the first exterior member.

### [Advantageous Effect of Invention]

According to an aspect of the present invention, it is possible to provide a vehicle structure that can reduce displacement of a detection wave passage section of an exterior member.

### [Brief Description of Drawings]

[Figure 1] Figure 1 is an exploded perspective view of a front portion of a vehicle to which a vehicle structure according to an embodiment of the present invention is applied, when viewed from a vehicle front side.
[Figure 2] Figure 2 is a partial front view of the vehicle structure when viewed from the vehicle front side.
[Figure 3] Figure 3 is a partial rear view of the vehicle structure when viewed from a vehicle rear side.
[Figure 4] Figure 4 is a partial rear view of the vehicle structure from which a reinforcement member is removed when viewed from the vehicle rear side.
[Figure 5] Figure 5 is a partial perspective view of the vehicle structure when viewed from the vehicle rear side.
[Figure 6] Figure 6 is a partial perspective view of the vehicle structure from which the reinforcement member is removed when viewed from the vehicle rear side.
[Figure 7] Figure 7 is a partial rear view of the vehicle structure for description of disposition of a second-exterior-member-side coupling portion and a reinforcement-member-side coupling portion.
[Figure 8] Figure 8 is a partial rear view of a sensor support member attached to a first exterior member.

### [Mode for Carrying Out the Invention]

Exemplary embodiments of the present invention will be described below with reference to the accompanying drawings. In the drawings, the direction of arrow Fr indicates a vehicle front side in a vehicle front-rear direction. The direction of arrow L indicates a left side of the vehicle in a vehicle width direction in a state in which the vehicle is viewed from the rear side toward the front side. The direction of arrow U indicates a vehicle upper side in a vehicle up-down direction (hereinafter referred to as an up-down direction). In the following description, "front" and "rear" correspond to front and rear, respectively, in the vehicle front-rear direction, and "up" and "down" correspond to up and down, respectively, in the vehicle up-down direction. In addition, "left" and "right" correspond to left and right, respectively, in the vehicle width direction in a state viewed from the vehicle rear side toward the vehicle front side.

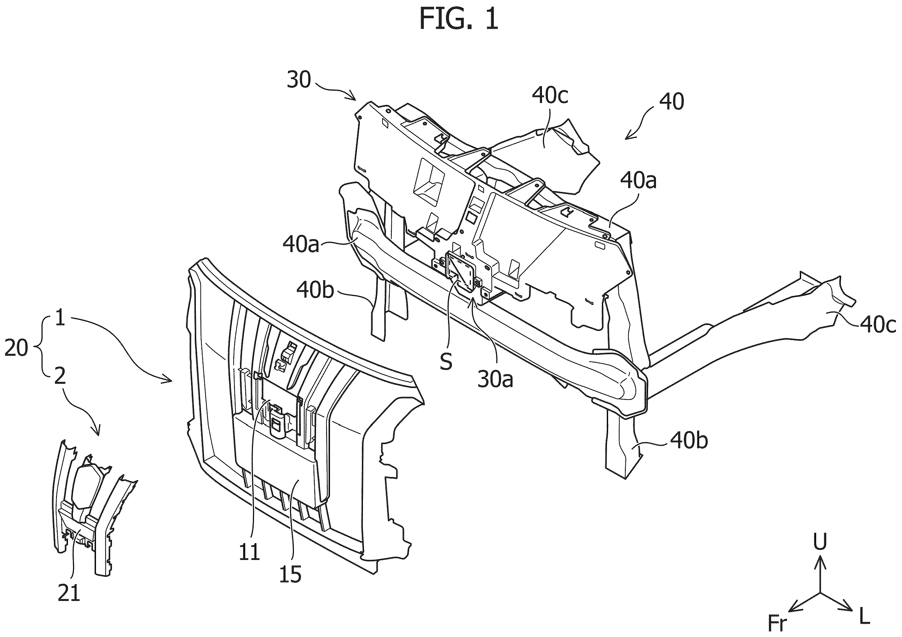

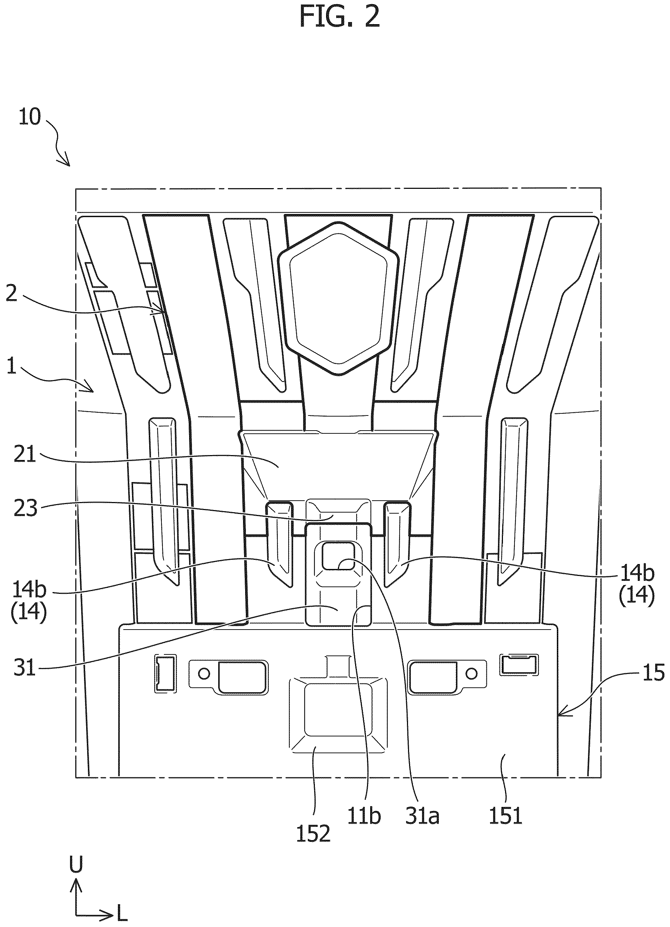

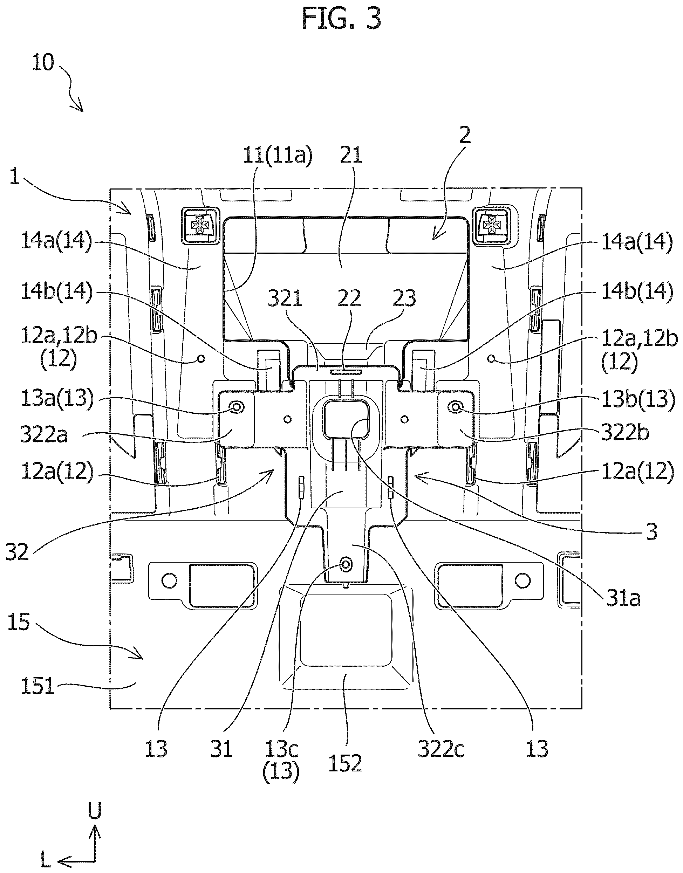

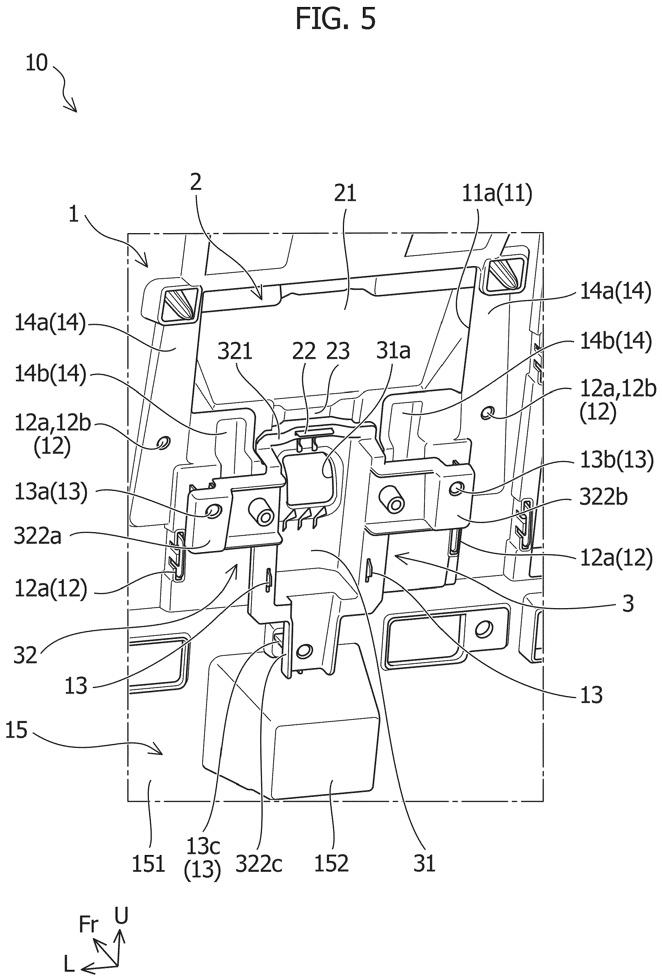

As illustrated in Figures 1 and 2, a vehicle structure 10 according to the present embodiment includes a first exterior member 1 and a second exterior member 2 disposed at a front portion, rear portion, or side portion of a vehicle such as an automobile. In addition, as illustrated in Figures 3 and 5, the vehicle structure 10 includes a reinforcement member 3 attached to the first exterior member 1. In the present embodiment, the vehicle structure 10 is applied to the front portion of the vehicle, and the first exterior member 1 and the second exterior member 2 are disposed at the front portion of the vehicle. Accordingly, in the present embodiment, "vehicle outer side" and "vehicle outward" according to the present invention are the vehicle front side and the vehicle frontward, respectively, and "vehicle inner side" and "vehicle inward" according to the present invention are the vehicle rear side and vehicle rearward, respectively. Note that the front portion of the vehicle includes not only a central portion in the vehicle width direction, facing the vehicle front side, but also side end portions on both sides in the vehicle width direction, facing forward and obliquely to sides.

An exterior panel 20 including the first exterior member 1 and the second exterior member 2, a sensor support member 30 that supports a sensor device S configured to sense an environment outside the vehicle, and a vehicle body structure member 40 are provided at the front portion of the vehicle. In the present embodiment, the exterior panel 20 is a bumper panel, the first exterior member 1 is a grille panel having a plurality of ventilation holes penetrating in the vehicle front-rear direction, and the second exterior member 2 is a decorative panel that is attached to the first exterior member 1 from the vehicle front side. The exterior panel 20 may further include another exterior member such as a side panel disposed on each side of the first exterior member 1 in the vehicle width direction.

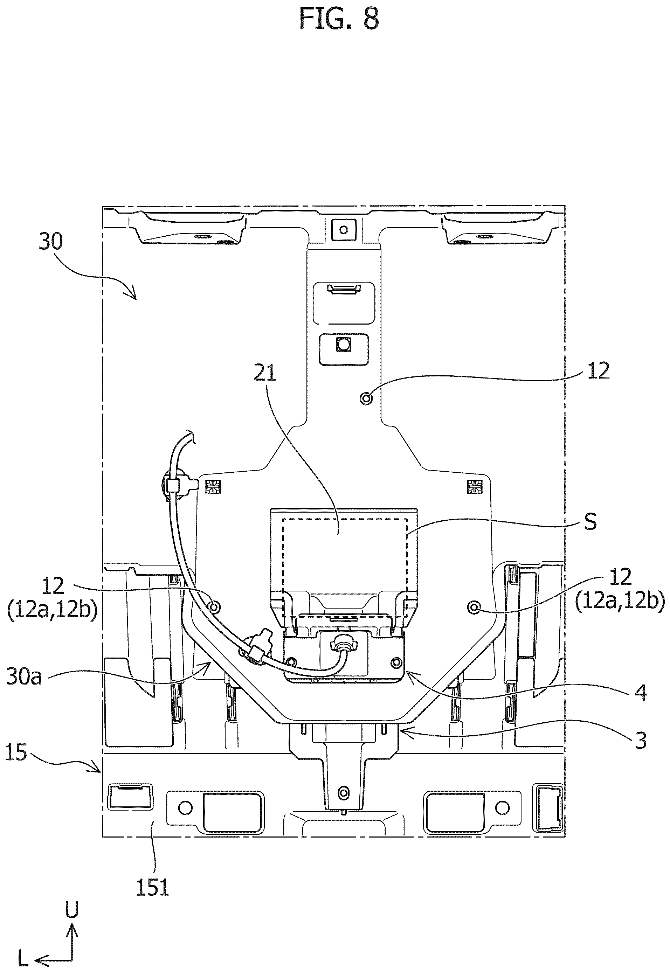

The sensor support member 30 is disposed on the vehicle rear side (vehicle inner side) of the first exterior member 1 and supports the sensor device S (see Figures 1 and 8) at a sensor support portion 30a. The sensor device S is, for example, a millimeter wave radar that uses electromagnetic waves in a millimeter wave band as detection waves, and transmits (emits) and receives (detects) detection waves. The vehicle body structure member 40 is a highly rigid member that is made of a steel plate or the like and constitutes a framework of the vehicle. The vehicle body structure member 40 includes a plurality of cross members 40a, a pair of left and right pillar members 40b, a pair of left and right side members 40c, and the like. The sensor support member 30 is affixed to the vehicle body structure member 40 and supported from the vehicle rear side by the vehicle body structure member 40. The exterior panel 20 (first exterior member 1 and second exterior member 2) is affixed to the vehicle body structure member 40 directly or indirectly through the sensor support member 30 and is supported from the vehicle rear side by the vehicle body structure member 40.

The first exterior member 1 constitutes a design surface on the vehicle outer side at the front portion of the vehicle. The first exterior member 1 extends in the up-down direction and the vehicle width direction and is disposed substantially facing the vehicle front side (vehicle outer side). The first exterior member 1 constitutes a design surface at a central portion in the vehicle width direction among the design surface at the front portion of the vehicle. The sensor device S is disposed on the vehicle rear side (vehicle inner side) of the first exterior member 1 in an orientation in which its sensor surface (not illustrated) faces the vehicle front side (vehicle outer side). In the illustrated example, the sensor device S is a substantially rectangular parallelepiped and is fixed to a sensor support portion 30a of the sensor support member 30 by a sensor bracket (not shown).

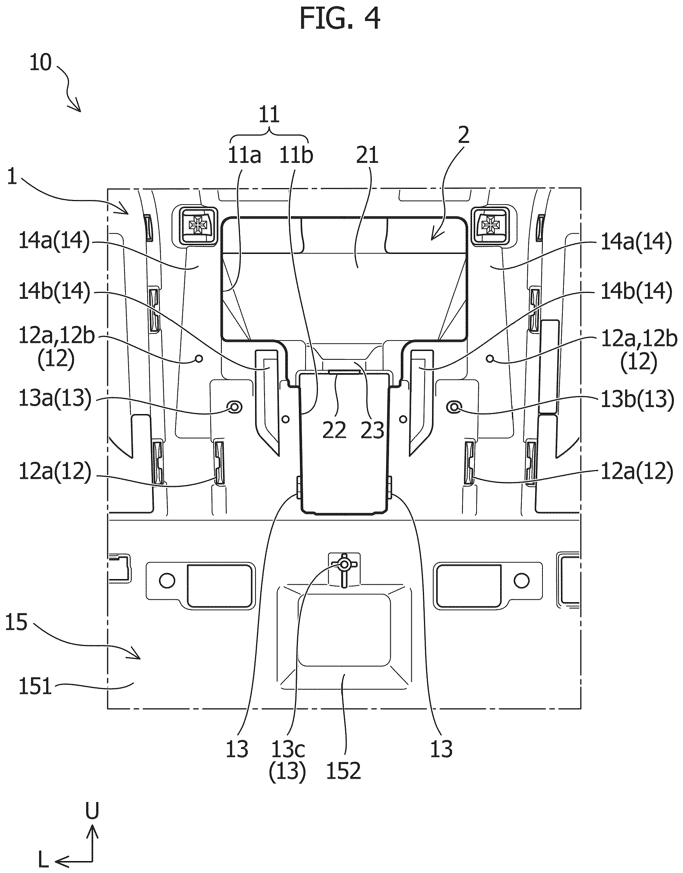

As illustrated in Figures 3 and 4, the first exterior member 1 has a sensor opening 11 through which detection waves to be detected by the sensor device S pass. The sensor opening 11 penetrates the first exterior member 1 in the vehicle front-rear direction (vehicle in-out direction), which is the thickness direction of the first exterior member 1, and is larger than the sensor surface. Detection waves pass through the sensor opening 11 in the vehicle front-rear direction (vehicle in-out direction). In the present embodiment, the sensor opening 11 has a substantially T-shape in a plan view from one side in the vehicle front-rear direction, and has an upper opening body portion 11a for the sensor device S, and a lower extended opening portion 11b for a camera as described later in detail. The sensor opening 11 is provided at a central portion of the first exterior member 1 in the vehicle width direction and the up-down direction.

The second exterior member 2 is disposed on the vehicle front side (vehicle outer side) of part of the first exterior member 1 and covers the part of the first exterior member 1 from the vehicle front side (vehicle outer side). In the present embodiment, the second exterior member 2 as a decorative panel covers a central portion of the first exterior member 1 in the vehicle width direction and its upper portion. In the following description, the part of the first exterior member 1 covered by the second exterior member 2 is referred to as a covered portion, and the other portion of the first exterior member 1 than the covered portion is referred to as a non-covered portion. The covered portion includes at least part of the sensor opening 11.

As illustrated in Figures 2 to 6, the second exterior member 2 includes a detection wave passage section 21 that covers at least part of the sensor opening 11 from the vehicle front side (vehicle outer side) and through which detection waves pass. In the present embodiment, the detection wave passage section 21 covers the opening body portion 11a of the sensor opening 11. A peripheral portion of the detection wave passage section 21 of the second exterior member 2 is attached to the peripheral portion of the sensor opening 11 by being coupled to the peripheral portion of the sensor opening 11 at a second-exterior-member-side coupling portion 12, to be described later.

The detection wave passage section 21 is a thin plate-shaped portion substantially facing the vehicle front side and formed of a material, such as a synthetic resin, which has a characteristic that detection waves can transmit. The detection wave passage section 21 is formed larger than the sensor surface and faces the sensor surface in the vehicle front-rear direction (vehicle in-out direction) through the sensor opening 11. In the illustrated example, the detection wave passage section 21 has an inverted trapezoidal shape in a plan view from one side in the vehicle front-rear direction. Detection waves transmitted from the sensor device S transmit (pass) through the detection wave passage section 21 and are emitted to the vehicle front side. When there is an obstacle on the vehicle front side, detection waves having been reflected by the obstacle and transmitted (passed) through the detection wave passage section 21 are received and detected by the sensor device S.

Note that the sensor device S is not limited to a millimeter wave radar and may be a sound wave sensor (ultrasonic wave sensor or sonar) that uses sound waves as detection waves, a camera (image capturing device) that uses electromagnetic waves in a visible light band or an infrared band as detection waves, or the like. In this case, the detection wave passage section 21 may have a through hole (opening). Detection waves may be sunlight or be transmitted from a detection wave transmission device provided separately from the sensor device S, and in such a case, the sensor device S may not emit detection waves.

As illustrated in Figures 3 and 5, the reinforcement member 3 reinforces the peripheral portion of the sensor opening 11 of the first exterior member 1. Specifically, the reinforcement member 3 is coupled and attached to the peripheral portion of the sensor opening 11 from the vehicle rear side (vehicle inner side) and reinforces the peripheral portion of the sensor opening 11 from the vehicle inner side. In the present embodiment, the reinforcement member 3 is a cover member attached to the first exterior member 1 to protect a camera configured to capture an image of an obstacle or the like on the vehicle front side (vehicle outer side), and is also an exterior member constituting part of the design surface on the vehicle outer side at the vehicle front portion. The reinforcement member 3 is attached to a lower portion (specifically, peripheral portion of the extended opening portion 11b) of the peripheral portion of the sensor opening 11.

Specifically, the reinforcement member 3 includes a protruding portion 31 inserted into the extended opening portion 11b from the vehicle rear side (vehicle inner side) and protruding toward the vehicle front side (vehicle outer side) with respect to the first exterior member 1, and an attachment portion 32 provided around the protruding portion 31 and attached to the first exterior member 1 from the vehicle rear side. The protruding portion 31 has a convex shape bulging toward the vehicle front side (vehicle outer side) and open toward the vehicle rear side (vehicle inner side), and a camera is housed inside the protruding portion 31. A camera exposure hole 31a is open through a front wall of the protruding portion 31, which faces the vehicle front side, and the front surface of the camera is exposed to the vehicle outer side through the camera exposure hole 31a. The attachment portion 32 includes an edge portion 321 surrounding the protruding portion 31, and three flange portions 322a, 322b, and 322c extending from the edge portion 321 toward a side opposite the protruding portion 31. The three flange portions 322a, 322b, and 322c are provided on the left side, right side, and lower side, respectively, of the protruding portion 31 and extend leftward, rightward, and downward, respectively, with respect to the protruding portion 31. The flange portions 322a, 322b, and 322c are coupled to the first exterior member 1 at reinforcement-member-side coupling portions 13 (13a, 13b, and 13c), to be described later, and accordingly, the reinforcement member 3 is attached to the peripheral portion of the sensor opening 11.

To maintain a desired sensing accuracy of the sensor device S, it is necessary to maintain the relative positional relationship (distance and angle) between the sensor device S and the detection wave passage section 21. In particular, in a case of the sensor device S such as a millimeter wave radar that uses detection waves with high directivity, high accuracy of the relative positional relationship is required to maintain sensing accuracy. According to the present embodiment, the peripheral portion of the detection wave passage section 21 is attached to the peripheral portion of the sensor opening 11, and the peripheral portion of the sensor opening 11 is reinforced by the reinforcement member 3. This increases the support rigidity for the detection wave passage section 21. Accordingly, even when external force due to vibrations of the vehicle during driving, minor collisions, or the like is received by the first and second exterior members 1 and 2, displacement of the detection wave passage section 21 of the second exterior member 2 can be reduced, and as a result, the sensing accuracy of the sensor device S can be maintained.

The vehicle structure 10 will be described below in detail. As illustrated in Figures 3 and 5, in the present embodiment, the reinforcement member 3 is coupled to the second exterior member 2 in addition to the first exterior member 1. With this configuration, the support rigidity of the reinforcement member 3 for the second exterior member 2 increases, and accordingly, the support rigidity for the detection wave passage section 21 further increases. Thus, displacement of the detection wave passage section 21 can be more reliably reduced, and the sensing accuracy of the sensor device S can be more reliably maintained.

Specifically, as illustrated in Figures 3 to 6, a reinforcement coupling portion 22 to which the reinforcement member 3 is coupled is provided at the peripheral portion of the detection wave passage section 21 of the second exterior member 2. The reinforcement member 3 is coupled to the second exterior member 2 at the reinforcement coupling portion 22. In the illustrated example, the reinforcement coupling portion 22 includes an engagement claw protruding toward the vehicle rear side, and an engagement hole is provided at a portion of the reinforcement member 3, which corresponds to the engagement claw. The reinforcement member 3 is directly coupled to the second exterior member 2 through engagement of the engagement claw with the engagement hole. The reinforcement member 3 may be coupled to the second exterior member 2 by using another coupling member such as a bolt. Alternatively, the reinforcement member 3 may be coupled to the second exterior member 2 through the first exterior member 1.

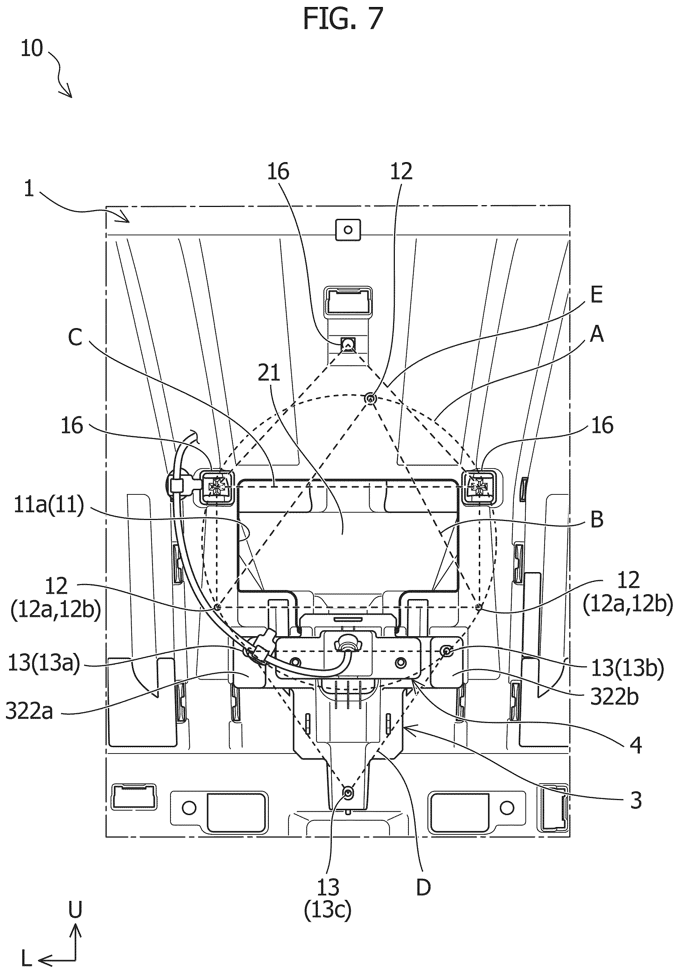

As illustrated in Figure 7, in the present embodiment, a bracket 4 that reinforces the reinforcement member 3 may be provided at the reinforcement member 3. With this configuration, the rigidity of the reinforcement member 3 increases, and accordingly, the support rigidity for the detection wave passage section 21 further increases. Thus, displacement of the detection wave passage section 21 can be more reliably reduced, and the sensing accuracy of the sensor device S can be more reliably maintained.

In the present embodiment, the bracket 4 is a member for attaching a camera to the reinforcement member 3 or a member for hiding the camera exposure hole 31a in a design without a camera. The bracket 4 is attached to the reinforcement member 3 from the vehicle rear side (vehicle inner side) and reinforces the reinforcement member 3 from the vehicle rear side (vehicle inner side). In the illustrated example, the bracket 4 is a plate-shaped member with a substantially rectangular shape that is elongated in the vehicle width direction in a plan view in the vehicle front-rear direction. The bracket 4 includes a camera attachment portion to which a camera is attached from the front side, and a pair of reinforcement member attachment portions on the left and right sides of the camera attachment portion. A camera attached to the camera attachment portion is disposed inside the protruding portion 31. The pair of reinforcement member attachment portions is attached (affixed) to the attachment portion 32 (322a and 322b) of the reinforcement member 3 on the respective sides of the protruding portion 31 in the vehicle width direction.

As illustrated in Figures 2 to 6, in the present embodiment, the second exterior member 2 includes a passage-section-side bulging portion 23 that is adjacent to the detection wave passage section 21 and bulges toward the vehicle front side (vehicle outer side). The reinforcement member 3 is coupled to a peripheral portion of the passage-section-side bulging portion 23 of the second exterior member 2. The passage-section-side bulging portion 23 and its peripheral portion have high rigidity. Thus, since the passage-section-side bulging portion 23 is provided at a position adjacent to the detection wave passage section 21, the rigidity of the detection wave passage section 21 and its peripheral portion increases, and accordingly, displacement of the detection wave passage section 21 can be more reliably reduced. Moreover, since the reinforcement member 3 is coupled to the peripheral portion of the passage-section-side bulging portion 23, the support rigidity of the reinforcement member 3 for the detection wave passage section 21 further increases and displacement of the detection wave passage section 21 can be further reliably reduced.

Specifically, the above-described reinforcement coupling portion 22 is provided at the peripheral portion of the passage-section-side bulging portion 23. In the illustrated example, the passage-section-side bulging portion 23 is adjacent on the lower side of a central portion of the detection wave passage section 21 in the vehicle width direction. The reinforcement coupling portion 22 is provided at a lower wall of the passage-section-side bulging portion 23, and the above-described engagement claw of the reinforcement coupling portion 22 protrudes toward the vehicle rear side from the rear end of the lower wall. The reinforcement member 3 is coupled to the peripheral portion of the passage-section-side bulging portion 23 through engagement of the engagement claw with the engagement hole of the reinforcement member 3.

As illustrated in Figures 3 to 6, in the present embodiment, the first exterior member 1 includes a plurality of second-exterior-member-side coupling portions 12 to which the second exterior member 2 is coupled and a plurality of reinforcement-member-side coupling portion 13 to which the reinforcement member 3 is coupled. The plurality of second-exterior-member-side coupling portions 12 are disposed at the entire covered portion of the first exterior member 1, and the plurality of reinforcement-member-side coupling portions 13 are disposed at the peripheral portion of the sensor opening 11. In the referred to diagram, only some of the second-exterior-member-side coupling portions 12 are denoted by reference signs.

The plurality of second-exterior-member-side coupling portions 12 include at least one reinforcement-member-near coupling portion 12a disposed near any of the plurality of reinforcement-member-side coupling portions 13 at the peripheral portion of the sensor opening 11. Each reinforcement-member-side coupling portion 13 and its peripheral portion have high rigidity. Thus, since the reinforcement-member-near coupling portion 12a is disposed near a reinforcement-member-side coupling portion 13 at the peripheral portion of the sensor opening 11, the support rigidity of the first exterior member 1 for the detection wave passage section 21 increases, and accordingly, displacement of the detection wave passage section 21 can be more reliably reduced.

In the illustrated example, two reinforcement-member-near coupling portions 12a are disposed near first and second reinforcement-member-side coupling portions 13a and 13b, respectively, among the plurality of reinforcement-member-side coupling portions 13. Specifically, the plurality of reinforcement-member-side coupling portions 13 include the first reinforcement-member-side coupling portion 13a, the second reinforcement-member-side coupling portion 13b, and the third reinforcement-member-side coupling portion 13c that are disposed on the left side, right side, and lower side, respectively, of the extended opening portion 11b and coupled to the flange portions 322a, 322b, and 322c, respectively, of the reinforcement member 3. The two reinforcement-member-near coupling portions 12a are disposed on the upper and lower sides of each of the first and second reinforcement-member-side coupling portions 13a and 13b.

At each second-exterior-member-side coupling portion 12, the second exterior member 2 is coupled to the first exterior member 1 by using a coupling member such as a bolt or a clip or through engagement of the engagement claw of the second exterior member 2 with the engagement hole of the first exterior member 1. At each reinforcement-member-side coupling portion 13, the reinforcement member 3 is coupled to the first exterior member 1 by using a coupling member such as a bolt or a clip or through engagement of the engagement claw with the engagement hole. In the illustrated example, at each reinforcement-member-side coupling portion 13, the two elements, that is, the first exterior member 1 and the reinforcement member 3, are coupled in an overlapping manner. At least one reinforcement-member-side coupling portion 13 (for example, the first and second reinforcement-member-side coupling portions 13a and 13b), the three elements, that is, the first exterior member 1, the second exterior member 2, and the reinforcement member 3, may be coupled in an overlapping manner.

As illustrated in Figures 2 to 6, in the present embodiment, the first exterior member 1 includes a concave portion 14 provided at the peripheral portion of the sensor opening 11. The concave portion 14 extends in the up-down direction and is recessed toward the vehicle inner side or the vehicle outer side. The first exterior member 1 includes the above-described plurality of second-exterior-member-side coupling portions 12, and the plurality of second-exterior-member-side coupling portions 12 include at least one concave-portion coupling portion 12b disposed at the concave portion 14.

The concave portion 14 extending in the up-down direction has high rigidity in the up-down direction. Thus, since the concave-portion coupling portion 12b is disposed at the concave portion 14, the rigidity of the peripheral portion of the sensor opening 11 in the up-down direction increases, and accordingly, the support rigidity of the reinforcement member 3 in the up-down direction increases. As a result, the support rigidity for the detection wave passage section 21 further increases, and displacement of the detection wave passage section 21 can be more reliably reduced. In particular, the support rigidity of the reinforcement member 3 effectively increases by combining the concave-portion coupling portion 12b and the above-described bracket 4, and accordingly, displacement of the detection wave passage section 21 can be further reliably reduced.

In the illustrated example, the first exterior member 1 includes, as the concave portions 14, two first concave portions 14a recessed toward the vehicle rear side (vehicle inner side), and two second concave portions 14b recessed toward the vehicle front side (vehicle outer side). The two first concave portions 14a are disposed on the respective sides of the opening body portion 11a in the vehicle width direction and extend along an opening edge of the opening body portion 11a. The two second concave portions 14b are disposed on the respective sides of the extended opening portion 11b in the vehicle width direction and extend along an opening edge of the extended opening portion 11b. The concave-portion coupling portions 12b are provided on bottom walls of the first concave portions 14a, respectively, which face the vehicle front side. Each second concave portion 14b is provided at a peripheral portion of the corresponding concave-portion coupling portion 12b. In other words, the plurality of second-exterior-member-side coupling portions 12 include concave-portion-surrounding coupling portions (12b) disposed around concave portions (14b).

In the illustrated example, the first concave portion 14a and the second concave portion 14b are disposed near each of the first and second reinforcement-member-side coupling portions 13a and 13b. Specifically, a lower end portion of the first concave portion 14a and the second concave portion 14b are disposed on the respective sides of each of the first and second reinforcement-member-side coupling portions 13a and 13b in the vehicle width direction. With such disposition, the rigidity of the first and second reinforcement-member-side coupling portions 13a and 13b and its peripheral portion increases. Accordingly, the support rigidity of the reinforcement member 3 increases, and displacement of the detection wave passage section 21 can be more reliably reduced.

As illustrated in Figures 1 to 3, for example, in the present embodiment, the first exterior member 1 includes a plate support portion 15 that supports a license plate from the vehicle inner side, and the reinforcement member 3 is coupled to the plate support portion 15 as well. A license plate is also referred to as a number plate. The plate support portion 15 supporting a license plate has high rigidity. Thus, since the reinforcement member 3 is coupled to the plate support portion 15, the support rigidity of the reinforcement member 3 for the peripheral portion of the sensor opening 11 increases, and displacement of the peripheral portion of the sensor opening 11 can be reduced. Moreover, when the reinforcement member 3 is coupled to the second exterior member 2, the support rigidity for the detection wave passage section 21 effectively increases, and displacement of the detection wave passage section 21 can be more effectively reduced.

Specifically, the plate support portion 15 includes a quadrilateral support wall 151 extending in the up-down direction and the vehicle width direction and facing the vehicle front side. A license plate is attached to the front surface of the support wall 151 by using bolts. The plate support portion 15 is provided around the sensor opening 11 at the non-covered portion of the first exterior member 1. In the illustrated example, the plate support portion 15 is adjacent on the lower side of the sensor opening 11 (extended opening portion 11b). At least one of the plurality of reinforcement-member-side coupling portions 13 is disposed at the plate support portion 15. In the illustrated example, the lower third reinforcement-member-side coupling portion 13c is disposed at an upper end portion of the plate support portion 15, and the lower flange portion 322c of the reinforcement member 3 is coupled to the plate support portion 15 at the third reinforcement-member-side coupling portion 13c.

As illustrated in Figures 3 to 6, the plate support portion 15 includes a support-portion-side bulging portion 152 that bulges toward the vehicle rear side (vehicle inner side) from the support wall 151, and the above-described third reinforcement-member-side coupling portion (reinforcement-member-side coupling portion) 13c. The third reinforcement-member-side coupling portion 13c is coupled to (is connected to or is affixed to) the support wall 151 and the support-portion-side bulging portion 152. With this configuration, the support wall 151 to which a license plate is attached and the support-portion-side bulging portion 152 both have high rigidity, and accordingly, the third reinforcement-member-side coupling portion 13c has high rigidity. Since the reinforcement member 3 is coupled to such a third reinforcement-member-side coupling portion 13c, the support rigidity of the first exterior member 1 for the reinforcement member 3 increases. As a result, the support rigidity for the detection wave passage section 21 further increases, and displacement of the detection wave passage section 21 can be further reliably reduced.

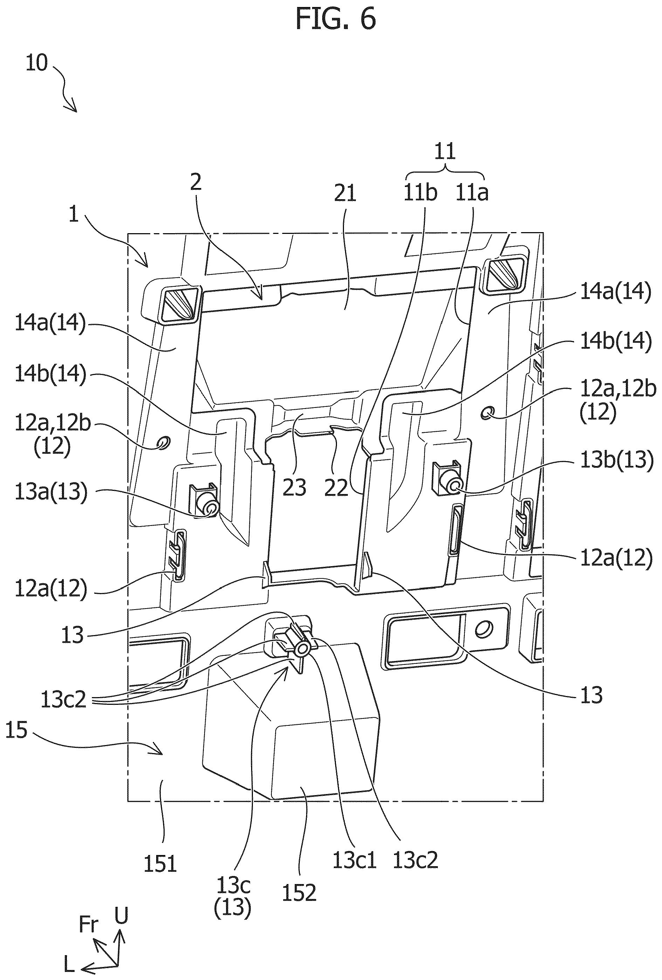

Specifically, the support-portion-side bulging portion 152 is provided near the third reinforcement-member-side coupling portion 13c. In the illustrated example, the support-portion-side bulging portion 152 has a substantially quadrangular frustum shape that narrows toward the vehicle rear side and is provided below the third reinforcement-member-side coupling portion 13c. As illustrated in Figure 6, the third reinforcement-member-side coupling portion 13c is coupled to (is connected to or is affixed to) the rear surface of the support wall 151 and the upper surface of the support-portion-side bulging portion 152.

More specifically, the third reinforcement-member-side coupling portion 13c includes a tubular boss 13c1 formed with a screw hole, and a plurality of ribs 13c2 protruding outward in the radial direction from the outer peripheral surface of the boss 13c1. The boss 13c1 protrudes toward the vehicle rear side from the rear surface of the support wall 151, and the front end face of the boss 13c1 is coupled to (is connected to or is affixed to) the rear surface of the support wall 151. The reinforcement member 3 is coupled to the third reinforcement-member-side coupling portion 13c by a bolt screwed into the screw hole from the vehicle front side. The plurality of ribs 13c2 is arranged in the circumferential direction with intervals therebetween and each extend in the longitudinal direction of the boss 13c1. In the illustrated example, four ribs 13c2 are provided on the upper, lower, left, and right sides of the boss 13c1. The lower rib 13c2 protruding downward is coupled to (is connected to or is affixed to) the upper surface of the support-portion-side bulging portion 152.

In the present embodiment, as described above, the sensor opening 11 includes the opening body portion 11a through which detection waves pass, and the extended opening portion 11b that extends from the opening body portion 11a to a peripheral portion of the covered portion. As described above, the reinforcement member 3 includes the protruding portion 31 inserted into the extended opening portion 11b from the vehicle rear side (vehicle inner side) and protruding toward the vehicle front side (vehicle outer side) with respect to the first exterior member 1. As illustrated in Figure 2, the protruding portion 31 is an exposed portion that is exposed on the vehicle outer side and disposed adjacent to the second exterior member 2. As illustrated in Figures 3 and 5, the edge portion 321 of the attachment portion 32 surrounding the protruding portion 31 is coupled to the peripheral portion of the detection wave passage section 21. In the illustrated example, the protruding portion 31 is disposed adjacent on the lower side of the second exterior member 2, and an upper portion of the edge portion 321 is coupled to the peripheral portion of the detection wave passage section 21 at the reinforcement coupling portion 22.

With such a configuration, in an assembly process of the vehicle structure 10, it is easy to highly accurately position the reinforcement member 3 with respect to the second exterior member 2 attached to the first exterior member 1 so that the width of a clearance (gap) between the reinforcement member 3 (specifically, the protruding portion 31) and the second exterior member 2 is uniform. Accordingly, it is possible to improve the accuracy of the width of the clearance between the second exterior member 2 and the reinforcement member 3. Moreover, it is possible to improve the appearance quality of the front portion of the vehicle in a case in which the reinforcement member 3 is a cover or the like for a camera that is partially exposed on the vehicle outer side as in the present embodiment. In the illustrated example, the width of a clearance between the lower end of the passage-section-side bulging portion 23 and the upper end of the protruding portion 31 can be made uniform.

Specifically, the opening body portion 11a is provided at the covered portion of the first exterior member 1 and is covered from the vehicle front side by part of the second exterior member 2 including the detection wave passage section 21. The extended opening portion 11b is provided at the non-covered portion of the first exterior member 1 and is blocked from the vehicle rear side (vehicle inner side) by the reinforcement member 3. As described above, in the present embodiment, the sensor opening 11 has a substantially T-shape, the opening body portion 11a is constituted by an upper portion of the sensor opening 11, and the extended opening portion 11b is constituted by a lower portion of the sensor opening 11, which extends downward from the opening body portion 11a.

The protruding portion 31 has a front wall facing the vehicle front side, and a sidewall protruding toward the vehicle rear side from the periphery of the front wall. The front wall has a substantially rectangular shape extending in the up-down direction and the vehicle width direction. The sidewall has a substantially U shape in a plan view in the vehicle front-rear direction and extends along the left, right, and lower edges of the front wall. The extended opening portion 11b has a shape corresponding to the outer shape of the protruding portion 31, and the protruding portion 31 is fitted to the extended opening portion 11b from the vehicle rear side (vehicle inner side). The edge portion 321 has a substantially rectangular annular shape in a plan view from one side in the vehicle front-rear direction and extends along the upper end of the front wall and the rear end of the substantially U-shaped sidewall.

Figure 7 is a partial plan view of the vehicle structure 10 when viewed from the vehicle rear side, illustrating preferable disposition of the second-exterior-member-side coupling portions 12 and the reinforcement-member-side coupling portions 13 in the present embodiment.

Some of the second-exterior-member-side coupling portions 12 and some of the reinforcement-member-side coupling portions 13 are arranged so as to surround the detection wave passage section 21 (or the opening body portion 11a). Specifically, in a plan view from one side in the vehicle front-rear direction (vehicle in-out direction), some of the second-exterior-member-side coupling portions 12 and some of the reinforcement-member-side coupling portions 13 are arranged along circular imaginary line A surrounding the detection wave passage section 21 (or the opening body portion 11a). In the illustrated example, three second-exterior-member-side coupling portions 12 and two reinforcement-member-side coupling portions 13 (13a and 13b) are arranged along the imaginary line A. Two positioning portions 16 with which the first exterior member 1 and the second exterior member 2 are positioned with respect to each other are also arranged along the imaginary line A. With such disposition of the coupling portions 12 and 13 (and the positioning portions 16), it is possible to effectively increase the support rigidity of the first exterior member 1 and the reinforcement member 3 for the detection wave passage section 21, thereby more reliably reducing displacement of the detection wave passage section 21.

Three positioning portions 16 are illustrated in Figure 7. In a plan view from one side in the vehicle front-rear direction, the three positioning portions 16 are disposed at the three apexes of imaginary triangle E that is convex upward. For example, the first exterior member 1 has insertion holes at the positioning portions 16, and the second exterior member 2 has positioning protrusions such as bosses protruding toward the vehicle rear side at positions corresponding to the insertion holes. When the positioning protrusions are inserted into the insertion holes from the vehicle front side, the second exterior member 2 is positioned with respect to the first exterior member 1 such that the sensor opening 11 and the detection wave passage section 21 are disposed at predetermined relative positions. The positioning portions 16 are not limited to combinations of positioning protrusions and positioning holes, but the positioning may be configured to be performed by using coupling members such as bolts. In other words, the positioning portions 16 may constitute the second-exterior-member-side coupling portions 12.

An imaginary line connecting the three second-exterior-member-side coupling portions 12 surrounding the detection wave passage section 21 (or the opening body portion 11a) forms first imaginary triangle B. In a plan view in the vehicle front-rear direction (vehicle in-out direction), a central portion of the first imaginary triangle B is positioned at a substantially central portion of the detection wave passage section 21. With such disposition, it is possible to effectively increase the support rigidity of the first exterior member 1 for the detection wave passage section 21, thereby more reliably reducing displacement of the detection wave passage section 21. As illustrated in Figure 8, the three second-exterior-member-side coupling portions 12 are also coupled to the sensor support member 30. In other words, the first exterior member 1, the second exterior member 2, and the sensor support member 30 are coupled in an overlapping manner in the vehicle front-rear direction at the three second-exterior-member-side coupling portions 12. Accordingly, the rigidity of peripheral portions of the three second-exterior-member-side coupling portions 12 increases, and as a result, displacement of the detection wave passage section 21 can be further reliably reduced.

In a plan view in the vehicle front-rear direction (vehicle in-out direction), the detection wave passage section 21 has a quadrilateral shape (in the illustrated example, an inverted trapezoidal shape), and the two second-exterior-member-side coupling portions 12 and the two the positioning portions 16 are disposed near the four respective corners of the detection wave passage section 21. Accordingly, an imaginary line connecting the two second-exterior-member-side coupling portions 12 and the two positioning portions 16 forms imaginary quadrilateral C (in the illustrated example, imaginary rectangle). With such a disposition, it is possible to more reliably reduce displacement of the detection wave passage section 21.

In a plan view in the vehicle front-rear direction (vehicle in-out direction), an imaginary line connecting the first to third reinforcement-member-side coupling portions 13a, 13b, and 13c forms second imaginary triangle D. The second imaginary triangle D is positioned below the first imaginary triangle B, and the first imaginary triangle B is convex upward, whereas the second imaginary triangle D is convex downward. In other words, the first imaginary triangle B and the second imaginary triangle D are outward-facing with respect to each other. With such a disposition, it is possible to effectively reduce deformation of the sensor opening 11 and its peripheral portion.

Although the embodiment of the present invention is described above, the present invention is not limited to the above-described embodiment and may include further modifications and changes based on the technical concept of the present invention.

For example, in the above-described embodiment, the reinforcement member 3 is a cover for protecting a camera and constitutes the design surface on the vehicle outer side, but it is not limited thereto and may be another member attached to the peripheral portion of the sensor opening 11. For example, the entire reinforcement member 3 may be disposed outside the sensor opening 11 without constituting the design surface. Moreover, the reinforcement member 3 may be attached to another portion of the peripheral portion of the sensor opening 11 in place of, or in addition to, the lower portion of the peripheral portion of the sensor opening 11.

In the above-described embodiment, the sensor opening 11 has a substantially T-shape including the opening body portion 11a and the extended opening portion 11b, but the specific configuration of the sensor opening 11 is not limited thereto and may be any other configuration. For example, the sensor opening 11 may have a shape other than a T-shape. Moreover, the sensor opening 11 may not include the extended opening portion 11b, and in this case, the entire sensor opening 11 may be covered by the second exterior member 2.

In the above-described embodiment, the vehicle structure 10 includes the first exterior member 1 that is a grille and the second exterior member 2 that is a decorative panel, but is not limited thereto and may include first and second exterior members 1 and 2 of any other kind. Specifically, the vehicle structure 10 of the present invention may be applied to the front portion of a vehicle including an exterior panel having a structure different from that of the exterior panel 20 described above, and the "first exterior member" and the "second exterior member" according to the present invention may be exterior members of any other kind disposed at the front portion of the vehicle.

In the above-described embodiment, the vehicle structure 10 is applied to the front portion of the vehicle, but it is not limited thereto and may be applied to the rear portion or side portion of the vehicle. Specifically, the first exterior member 1 and the second exterior member 2 may be disposed at the rear portion or side portion of the vehicle. In a case in which the vehicle structure 10 is applied to the rear portion of the vehicle, the first exterior member 1 and the second exterior member 2 are a rear bumper, a rear grille, a back panel, a rear door panel, or the like. In this case, "vehicle outer side" and "vehicle outward" according to the present invention are the vehicle rear side and vehicle rearward, respectively, and "vehicle inner side" and "vehicle inward" according to the present invention are the vehicle front side and the vehicle frontward, respectively. In a case in which the vehicle structure is applied to the side portion of the vehicle, the first exterior member 1 and the second exterior member 2 are a side panel, a side door panel, or the like. In this case, "vehicle outer side" and "vehicle outward" according to the present invention are the outer side and outward, respectively, in the vehicle width direction, and "vehicle inner side" and "vehicle inward" according to the present invention are the inner side and inward, respectively, in the vehicle width direction.

### [Reference Signs List]

- 1: First exterior member
- 11: Sensor opening
- 11a: Opening body portion
- 11b: Extended opening portion
- 12: Second-exterior-member-side coupling portion
- 12a: Reinforcement-member-near coupling portion
- 12b: Concave-portion coupling portion
- 13: Reinforcement-member-side coupling portion
- 13a: First reinforcement-member-side coupling portion
- 13b: Second reinforcement-member-side coupling portion
- 13c: Third reinforcement-member-side coupling portion
- 13c1: Boss
- 13c2: Rib
- 14: Concave portion
- 14a: First concave portion
- 14b: Second concave portion
- 15: Plate support portion
- 151: Support wall
- 152: Support-portion-side bulging portion
- 16: Positioning portion
- 2: Second exterior member
- 21: Detection wave passage section
- 22: Reinforcement coupling portion
- 23: Passage-section-side bulging portion
- 3: Reinforcement member
- 31: Protruding portion
- 31a: Camera exposure hole
- 32: Attachment portion
- 321: Edge portion
- 322a, 322b, 322c: Flange portion
- 4: Bracket
- 10: Vehicle structure
- 20: Exterior panel
- 30: Sensor support member
- 30a: Sensor support portion
- 40: Vehicle body structure member
- A: Imaginary line
- B: First imaginary triangle
- C: Imaginary rectangular shape
- D: Second imaginary triangle
- S: Sensor device

## Claims

1. A vehicle structure comprising:
a first exterior member constituting a design surface on a vehicle outer side at a front portion, rear portion, or side portion of a vehicle and having a sensor opening through which detection waves to be detected by a sensor device disposed on a vehicle inner side of the first exterior member pass; and
a second exterior member disposed on the vehicle outer side of part of the first exterior member, constituting a design surface on the vehicle outer side, and including a detection wave passage section that covers the sensor opening from the vehicle outer side and through which the detection waves pass, the vehicle structure being **characterized in that**
a peripheral portion of the detection wave passage section of the second exterior member is attached to a peripheral portion of the sensor opening of the first exterior member, and
the vehicle structure further includes a reinforcement member that reinforces the peripheral portion of the sensor opening of the first exterior member.

2. The vehicle structure according to claim 1, wherein the reinforcement member is coupled to the second exterior member.

3. The vehicle structure according to claim 2, wherein the reinforcement member is provided with a bracket that reinforces the reinforcement member.

4. The vehicle structure according to claim 1 or 2, wherein
the second exterior member includes a passage-section-side bulging portion that is adjacent to the detection wave passage section and bulges toward the vehicle outer side, and
the reinforcement member is coupled to a peripheral portion of the passage-section-side bulging portion of the second exterior member.

5. The vehicle structure according to claim 1 or 2, wherein
the first exterior member includes
a plurality of second-exterior-member-side coupling portions to which the second exterior member is coupled, and
a plurality of reinforcement-member-side coupling portions to which the reinforcement member is coupled, and
the plurality of second-exterior-member-side coupling portions includes at least one reinforcement-member-near coupling portion disposed near any of the plurality of reinforcement-member-side coupling portions at the peripheral portion of the sensor opening.

6. The vehicle structure according to claim 3, wherein
the first exterior member includes
a plurality of second-exterior-member-side coupling portions to which the second exterior member is coupled, and
a concave portion that is provided at the peripheral portion of the sensor opening, extends in an up-down direction, and is recessed toward the vehicle inner side or the vehicle outer side, and
the plurality of second-exterior-member-side coupling portions include at least one concave-portion coupling portion disposed at the concave portion.

7. The vehicle structure according to claim 1 or 2, wherein
the first exterior member includes a plate support portion that supports a license plate from the vehicle inner side, and
the reinforcement member is coupled to the plate support portion.

8. The vehicle structure according to claim 7, wherein
the plate support portion includes
a support-portion-side bulging portion that bulges toward the vehicle inner side from a support wall that extends in an up-down direction and to which the license plate is attached from the vehicle outer side, and
a reinforcement-member-side coupling portion that is disposed on the vehicle inner side of the support wall and to which the reinforcement member is coupled, and
the reinforcement-member-side coupling portion is coupled to the support wall and the support-portion-side bulging portion.

9. The vehicle structure according to claim 1 or 2, wherein
the sensor opening includes
an opening body portion through which the detection waves pass, and
an extended opening portion that extends from the opening body portion to a peripheral portion of the part covered by the second exterior member,
the reinforcement member includes a protruding portion inserted into the extended opening portion from the vehicle inner side, protruding toward the vehicle outer side with respect to the first exterior member, and disposed adjacent to the second exterior member, and
an edge portion surrounding the protruding portion of the reinforcement member is coupled to the peripheral portion of the detection wave passage section.
